# EUROPEAN PATENT SPECIFICATION

(11) **EP 2 866 325 B1**
(45) Date of publication and mention of the grant of the patent: **28.12.2016**
(21) Application number: 14189115.0
(22) Date of filing: 16.10.2014
(51) Int. Cl.: H02J 7/00

(54) **Battery, method, device and system for battery protection**
Batterie, Verfahren, Vorrichtung und System für Batterieschutz
Batterie, procédé, dispositif et système de protection de batterie

(30) Priority: 25.10.2013 CN 201310511991
(43) Date of publication of application: 29.04.2015
(73) Proprietor: Xiaomi Inc., Beijing 100085 (CN)
(72) Inventor: Xu, Bing, Haidian District (CN); Li, Zhijie, Haidian District (CN); Zhang, Pengfei, Haidian District, (CN)
(74) Representative: Hanna, Peter William Derek

(56) References cited:
- EP-A1- 1 857 828

## Description

### TECHNICAL FIELD

The disclosure relates to the field of power supply, and more particularly to a battery, a method, a device and a system for battery protection.

### BACKGROUND

Safety concerns for electronic equipment have become increasingly important as consequence of the increased developments of mobile terminals, such as mobile phones, tablet PCs and the like.

In the context of mobile phones, for example, many manufacturers produce and sell imitation batteries. Those imitation batteries, as compared with original batteries, have cheaper prices. Many users usually buy imitation batteries for saving money and to replace broken batteries, or in some cases users buy batteries unaware of the fact that are imitations.

The majority of imitation battery manufacturers, in order to save costs, may produce imitation batteries with inferior quality than the original ones. Some manufacturers may even produce very low-quality imitations batteries to counterfeit good ones, so as to deceive consumers to buy good batteries. The users, on the other hand, are not able to distinguish good and bad quality batteries from their appearances. When the imitation batteries are used, specifically low-quality batteries, the electronics of mobile phones may be damaged, even worse, low-quality batteries may explode, representing a risk for users' safety.

EP 1,857,28 A1 (Sony Corporation) is representative of the relevant state of the art.

### SUMMARY

A battery, and a method for battery protection is provided in accordance with the claims which follow.

In order to solve the problems that the imitation batteries may introduce, having taken in account the prior art, technical solutions are set as follows:

According to a first aspect of the embodiments of the present disclosure, there is provided a battery, comprising: a rechargeable power supply and a battery chip,
wherein the rechargeable power supply is configured to supply power to an electronic equipment; and
the battery chip is configured to detect whether the rechargeable power supply has started to supply power to the electronic equipment, and if the detection result is that the rechargeable power supply has started to supply power to the electronic equipment, transmit a customized signal to the electronic equipment through a predetermined transmitting pin; and wherein the electronic equipment is configured to recognize whether the customized signal is correct, and if the customized signal is incorrect, control the power supplied by the rechargeable power supply to be cut off.

In a first possible embodiment of the first aspect, the battery chip is also configured to stop transmitting the customized signal to the electronic equipment when the connection between the predetermined transmitting pin and the electronic equipment is cut off.

In combination of the first aspect or the first possible embodiment of the first aspect, in a second possible embodiment of the first aspect, the battery chip includes an oscillation circuit, a reference voltage generating circuit and a comparator, wherein the comparator has two input terminals to be connected respectively to the oscillation circuit and the reference voltage generating circuit, and the comparator has an output terminal to be connected to the predetermined transmitting pin;
the oscillation circuit is configured to generate a sine wave signal, after the rechargeable power supply starts to supply power to the electronic equipment;
the reference voltage generating circuit is configured to generate a predetermined reference voltage; and
the comparator is configured to compare the sine wave signal and the predetermined reference voltage and then generate the customized signal.

According to a second aspect of the embodiments of the present disclosure, there is provided a method for battery protection used in a battery, comprising:
detecting whether the battery has started to supply power to an electronic equipment; and
if the detection result is that the battery has started to supply power to the electronic equipment, transmitting the customized signal to the electronic equipment through a predetermined transmitting pin of the battery,
wherein the electronic equipment is configured to recognize whether the customized signal is correct, and
if the customized signal is incorrect, controlling the power supplied by the battery to be cut off.

In a first possible embodiment of the second aspect, the method further includes:
when the connection between the predetermined transmitting pin and the electronic equipment is cut off, stopping transmitting the customized signal to the electronic equipment.

In combination of the second aspect or the first possible embodiment of the second aspect, in a second possible embodiment of the second aspect, the transmitting the customized signal to the electronic equipment through the predetermined transmitting pin includes:
generating a sine wave signal;
generating a predetermined reference voltage;
comparing the sine wave signal and the predetermined reference voltage, and then generating the customized signal; and
transmitting the customized signal to the electronic equipment through the predetermined transmitting pin of the battery.

According to a third aspect of the embodiments of the present disclosure, there is provided a method for battery protection used in an electronic equipment, comprising:
receiving a customized signal sent by a battery through a predetermined receiving pin;
recognize whether the customized signal is correct; and
if the customized signal is incorrect, controlling the electronic equipment to cut off the power supplied by the battery.

In a first possible embodiment of the third aspect, the method further includes:
detecting whether the customized signal sent from the battery is received in a predetermined time period, wherein the predetermined time period is a time period after the electronic equipment has finished its boot initialization;
if the customized signal sent from the battery is not received in the predetermined time period, executing the step of controlling the electronic equipment to cut off the power supplied by the battery; and
if the customized signal sent from the battery is received in the predetermined time period, executing the step of recognizing whether the customized signal is correct.

In combination of the third aspect or the first possible embodiment of the third aspect, in a second possible embodiment of the third aspect, the method further includes:
if the customized signal is correct, keeping on supplying the power from the battery , and cutting off the connection between the predetermined receiving pin and the predetermined transmitting pin of the battery.

According to a fourth aspect of the embodiments of the present disclosure, there is provided a device for battery protection, comprising:
a signal receiving module configured to receive a customized signal sent from the battery through a predetermined receiving pin;
a signal recognizing module configured to recognize whether the customized signal is correct; and
a power cutting module configured to control the electronic equipment to cut off the power supplied by the battery, if the customized signal is incorrect.

In a first possible embodiment of the fourth aspect, the device further includes:
a signal detecting module configured to detect whether the customized signal sent from the battery is received in a predetermined time period, wherein the predetermined time period is a time period after the electronic equipment has finished its boot initialization;
a first executing module configured to trigger the power cutting module to execute an operation, if the customized signal sent from the battery is not received in the predetermined time period; and
a second executing module configured to trigger the signal recognizing module to execute an operation, if the customized signal sent from the battery is received in the predetermined time period.

In combination of the fourth aspect or the first possible embodiment of the fourth aspect, in a second possible embodiment of the fourth aspect, the device further includes:
a pin cutting module configured to keep on supplying the power from the battery if the customized signal is correct, and cut off the connection between the predetermined receiving pin and the predetermined transmitting pin of the battery.

According to a fifth aspect of the embodiments of the present disclosure, there is provided an electronic equipment, the electronic equipment comprising the device for battery protection as described in any one of the fourth aspect and various possible embodiments of the fourth aspect.

According to a sixth aspect of the embodiments of the present disclosure, there is provided a system for battery protection, the system comprising: a battery and an electronic equipment, wherein
the battery includes the battery as described in any one of the first aspect and various possible embodiments of the first aspect; and
the electronic equipment includes the electronic equipment as described in the fifth aspect.

According to a seventh aspect of the embodiments of the present disclosure, there is provided an electronic equipment, comprising:
one or more processors;
a memory; and
one or more modules stored in the memory and configured to be executed by the one or more processors, the one or more modules have following functions:
receiving a customized signal sent from the battery through a predetermined receiving pin;
recognizing whether the customized signal is correct; and
if the customized signal is incorrect, controlling the electronic equipment to cut off the power supplied by the battery.

The technical solutions provided by the embodiments of the present disclosure may include beneficial effects as below.

The battery chip may send a customized signal to the electronic equipment through the predetermined transmitting pin after the battery starts to supply power to the electronic equipment. Wherein the customized signal is used to recognize by the electronic equipment whether the customized signal is correct, and if the customized signal is incorrect, the power supplied by the battery is controlled to be cut off. The present invention solves the problems that the imitation batteries may introduce, and achieves the effects of keeping on supplying the power from the battery only when the battery in usage is guaranteed to be an original battery satisfying the requirements, improving the safety of the batteries and the electronic equipment.

### BRIEF DESCRIPTION OF THE DRAWINGS

The accompanying drawings here are incorporated into and as a part of the specification to illustrate the embodiments in compliance with the present application, and to explain the principles of the present application together with the specification.
Fig. 1 is a structural diagram showing a system for battery protection according to an exemplary embodiment;
Fig. 2 is a structural diagram showing a system for battery protection according to an exemplary embodiment;
Fig. 3 is a flow chart showing a method for battery protection according to an exemplary embodiment;
Fig. 4 is a flow chart showing a method for battery protection according to an exemplary embodiment;
Fig. 5 is a structural block diagram showing a device for battery protection according to an exemplary embodiment;
Fig. 6 is a structural block diagram showing a device for battery protection according to an exemplary embodiment;
Fig. 7 is a structural block diagram showing a system for battery protection according to an exemplary embodiment;
Fig. 8 is a structural diagram showing an electronic equipment according to an exemplary embodiment.

### DESCRIPTION OF THE EMBODIMENTS

Detailed description of the exemplary embodiments will be made herein, with examples thereof to be shown in drawings. In the following descriptions, when the drawings are referred to, unless expressed otherwise, the same number in different drawings refers to the same or similar elements.

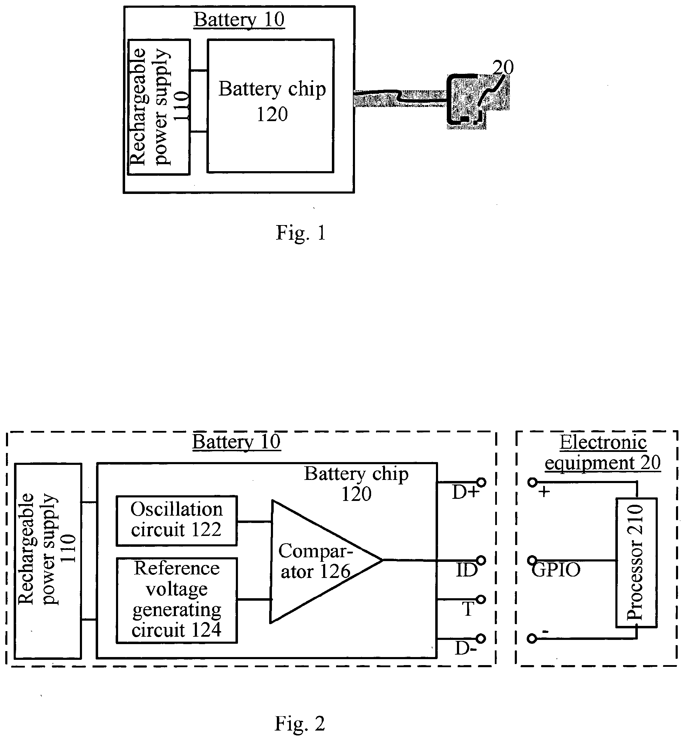

Fig. 1 is a structural diagram showing a system for battery protection according to an exemplary embodiment. The system for battery protection includes a battery 10 and an electronic equipment 20.

The battery 10 includes a rechargeable power supply 110 and a battery chip 120.

The rechargeable power supply 110 is configured to supply power to the electronic equipment 20, so as to guarantee the normal operation of the electronic equipment 20.

The battery chip 120 is configured to detect whether the rechargeable power supply 110 has started to supply the power to the electronic equipment 20, and if the detection result is that the rechargeable power supply 110 has started to supply the power to the electronic equipment 20, send a customized signal to the electronic equipment 20 through a predetermined transmitting pin.

The battery 10 and the electronic equipment 20 are connected through the predetermined pin.

The electronic equipment 20 is configured to recognize whether the customized signal sent from the battery 10 is correct, and if the customized signal is incorrect, control the power supplied by the rechargeable power supply 110 to be cut off.

In summary, in the system for battery protection provided by the present embodiment, the customized signal through the battery is sent to the electronic equipment, wherein the customized signal is used to recognize by the electronic equipment whether the customized signal is correct, and if the customized signal is incorrect, the power supplied by the battery is controlled to be cut off. Thus it solves the problems that the imitation batteries may lead to negative consequences in the prior art, and achieves the effects of keeping on supplying the power from the battery only when the battery in usage is guaranteed to be an original battery satisfying the requirements, improving the safety of the batteries and the electronic equipment.

Fig. 2 is a structural diagram showing a system for battery protection according to an exemplary embodiment. The system for battery protection includes a battery 10 and an electronic equipment 20.

Usually, the battery 10 includes four pins respectively as: a positive electrode D+ of the power supply, a negative electrode D- of the power supply, a temperature detection pin T and an identity pin ID. The positive electrode D+ of the power supply and the negative electrode D- of the power supply are respectively connected with the positive and negative electrodes of the electronic equipment 20 to constitute a power supply circuit, so as to supply electrical energy to the electronic equipment 20, so as to guarantee the normal operation of the electronic equipment 20. The identity pin ID is connected to the GPIO (General Purpose Input Output) pin of the electronic equipment 20, so as to send the customized signal to the electronic equipment 20.

The battery 10 includes a rechargeable power supply 110 and a battery chip 120.

The rechargeable power supply 110 is configured to supply power to the electronic equipment 20, so as to guarantee the normal operation of the electronic equipment 20.

The battery chip 120 is configured to detect whether the rechargeable power supply 110 has started to supply the power to the electronic equipment 20. If the detection result is that the rechargeable power supply 110 has started to supply the power to the electronic equipment 20, the customized signal is sent to the electronic equipment 20 through the predetermined transmitting pin. In the present embodiment, the identity pin ID is taken as an example of the predetermined transmitting pin, which is not specifically defined.

The battery chip 120 may include a power detecting circuit (not shown) to detect whether the rechargeable power supply 110 has started to supply the power to the electronic equipment 20.

The battery chip 120 further includes an oscillation circuit 122, a reference voltage generating circuit 124 and a comparator 126.

The oscillation circuit 122 in the battery chip 120 is configured to generate a sine wave signal; and the reference voltage generating circuit 124 is configured to generating a predetermined reference voltage. The sine wave signal and the predetermined reference voltage are output by the comparator 126 as the customized signal, which, for example, is a customized timing signal "0101010011". In particular, the comparator 126 includes two input terminals and one output terminal. The two input terminals of the comparator 126 are respectively connected with the oscillation circuit 122 and the reference voltage generating circuit 124, and the output terminal of the comparator 126 is connected with the predetermined transmitting pin. The comparator 126, after comparing the sine wave signal with the predetermined reference voltage, generates the customized signal. For example, when the sine wave signal has a voltage value greater than that of the predetermined reference voltage, a high level is output; and when the sine wave signal has a voltage value less than or equal to that of the predetermined reference voltage, a low level is output. The frequency and amplitude of the sine wave signal generated by the oscillation circuit 122 and the predetermined reference voltage generated by the comparator 126 may be set according to actual requirements.

In addition, the predetermined reference voltage generated by the reference voltage generating circuit 124 may be a certain invariable voltage value in the time domain, or may be a continuously changing voltage value in the time domain. Different predetermined reference voltages make the customized signals output by the comparator 126 different from each other. When the predetermined reference voltage is the certain invariable voltage value, the customized signal generated may be "10101"; and when the predetermined reference voltage is the continuously changing voltage value, the customized signal generated may be "11101".

The customized signal output by the comparator 126 passes through the predetermined transmitting pin of the battery 10, i.e. the identity pin ID, and the predetermined receiving pin of the electronic equipment 20, i.e. the GPIO pin, and is received by the processor 210 of the electronic equipment 20.

The electronic equipment 20 includes a processor 210 and a predetermined receiving pin, wherein the processor 210 is configured to recognize whether the customized signal sent from the battery 10 is correct and if the customized signal is incorrect, control the power supplied by the battery 10 to be cut off.

For example, one timing signal of "111111" may be pre-stored in the processor 210 of the electronic equipment 20. When the electronic equipment 20 receives, through the predetermined receiving pin, the customized signal of "0101010011" sent from the battery 10, which is different from the pre-stored "111111" after comparison, it means that the customized signal sent from the battery 10 is incorrect. The processor 210 controls the electronic equipment 20 to cut off the power supplied by the battery 10, so as to guarantee the safety of the power supply. In particular, a switch may be set in the power supply circuit on the side of the electronic equipment 20. When the processor 210 recognizes and finds that the customized signal is incorrect, it controls the switch in the power supply circuit to be cut off, thereby realizing cutting off of the power supplied by the battery 10. Only when the electronic equipment 20 receives, through the predetermined receiving pin, the customized signal of "111111" sent from the battery 10, the processor 210 keeps on supplying the power from the battery 10.

Usually, the batteries with the same specification and the same model are set to send the same customized signal, and the batteries with different specifications or different models are set to send different customized signals. Two or more customized signals may be pre-stored in the processor 210 of the electronic equipment 20. When the electronic equipment 20 receives the customized signal sent from the battery 10, if the customized signal is the same as the two pre-stored customized signals or one of the two pre-stored customized signals, it may pass the validation. In this way, the electronic equipment 20 may be compatible with the batteries with different sizes or different models.

It should be noted that, in order to save the electrical energy of the battery 10 and improve the usage time period of the battery 10, after the processor 210 of the electronic equipment 20 recognizes the customized signal sent from the battery 10 and determines that the customized signal is correct, the processor 210 may cut off the connection between the predetermined receiving pin and the predetermined transmitting pin of the battery 10, such that the battery 10 stops the sending of the customized signal. In a first possible embodiment, the electrical connection between the predetermined receiving pin of the electronic equipment 20 and the predetermined transmitting pin of the battery 10 is cut off; or, in a second possible embodiment, one switch is provided in the circuit receiving the customized signal on the side of the electronic equipment 20, and when the customized signal is determined as correct, the switch is controlled to be cut off. Correspondingly, when the battery chip 120 of the battery 10 detects that the connection between the predetermined transmitting pin and the electronic equipment 20 is cut off, it may stop the sending of the customized signal to the electronic equipment 20.

It also should be noted that, for those batteries not having the functions of transmitting the customized signals, in order to avoid the negative consequences caused by supplying power to the electronic equipment from those batteries, the processor of the electronic equipment detects, within a time period after the electronic equipment has finished its boot initialization (i.e. the predetermined time period), whether the customized signal sent from the battery is received within the predetermined time period. If the customized signal sent from the battery is not received within the predetermined time period, the processor of the electronic equipment controls the electronic equipment to cut off the power supplied by the battery. If the customized signal sent from the battery is received within the predetermined time period, the processor of the electronic equipment recognizes whether the customized signal is correct.

In summary, in the system for battery protection provided by the present embodiment, a customized signal is sent to the electronic equipment through the predetermined transmitting pin of the battery chip, wherein the customized signal is used to recognize by the electronic equipment whether the customized signal is correct and if the customized signal is incorrect, the power supplied by the battery is controlled to be cut off. Thus it solves the problems that the imitation batteries may lead to negative consequences in the prior art, and achieves the effects of keeping on supplying the power from the battery only when the battery in usage is guaranteed to be an original battery satisfying the requirements, improving the safety of the batteries and the electronic equipment.

In the system for battery protection provided by the present embodiment, by cutting off the connection between the predetermined receiving pin and the predetermined transmitting pin of the battery in the case that the processor of the electronic equipment has validated that the customized signal is correct, an effect of saving the electrical energy of the battery and improve the usage time period of the battery is achieved. Meanwhile, in the system for battery protection provided by the present embodiment, by detecting whether the customized signal sent from the battery is received within the predetermined time period, and if the customized signal sent from the battery is not received within the predetermined time period, the processor of the electronic equipment controlling the electronic equipment to cut off the power supplied by the battery, those batteries having no functions of transmitting the customized signals are prevented from supplying power to the electronic equipment thus, avoiding negative consequences.

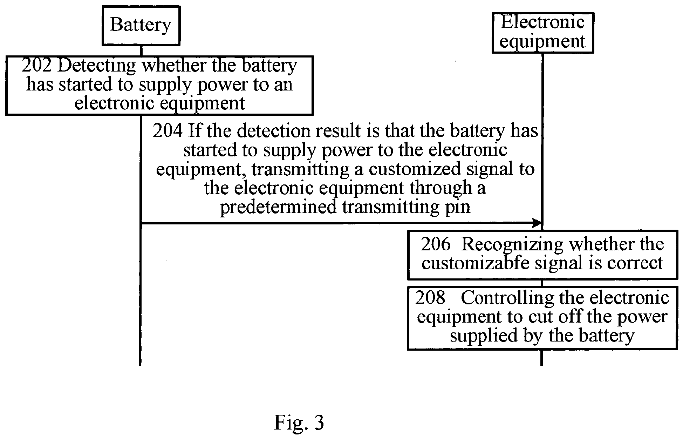

Fig. 3 is a flow chart showing a method for battery protection according to an exemplary embodiment. The method for battery protection is applied in the system for battery protection shown in Fig. 1 or Fig. 2. The method for battery protection may include steps as below.

In step 202, it is detected whether the battery has started to supply power to an electronic equipment.

The battery detects itself to know whether it has started to supply power to the electronic equipment.

In step 204, if the detection result is that battery has started to supply power to the electronic equipment, a customized signal is sent to the electronic equipment through the predetermined transmitting pin.

If the detection result is that battery has started to supply power to the electronic equipment, the battery transmits the customized signal to the electronic equipment through the predetermined transmitting pin.

Correspondingly, the electronic equipment receives, through the predetermined receiving pin, the customized signal sent from the battery.

In step 206, the customized signal is recognized whether it is correct.

The electronic equipment recognizes whether the customized signal is correct.

In step 208, if the customized signal is incorrect, the electronic equipment is controlled to cut off the power supplied by the battery.

If the customized signal is incorrect, the electronic equipment is controlled to cut off the power supplied by the battery.

Only Steps 202 to 204 may be implemented as the method for battery protection on the battery side, and only steps 206 to 208 may be implemented as the method for battery protection on the electronic equipment side.

In summary, in the method for battery protection provided by the present embodiment, the customized signal is sent to the electronic equipment through the predetermined transmitting pin of the battery chip, and the customized signal sent from the battery is received through the predetermined receiving pin of the electronic equipment, the electronic equipment recognizes whether the customized signal is correct, and if the customized signal is incorrect, the power supplied by the battery is controlled to be cut off. Thus it solves the problems that the imitation batteries may lead to negative consequences in the prior art, and achieves the effects of keeping on supplying the power from the battery only when the battery in usage is guaranteed to be an original battery satisfying the requirements, improving the safety of the batteries and the electronic equipment.

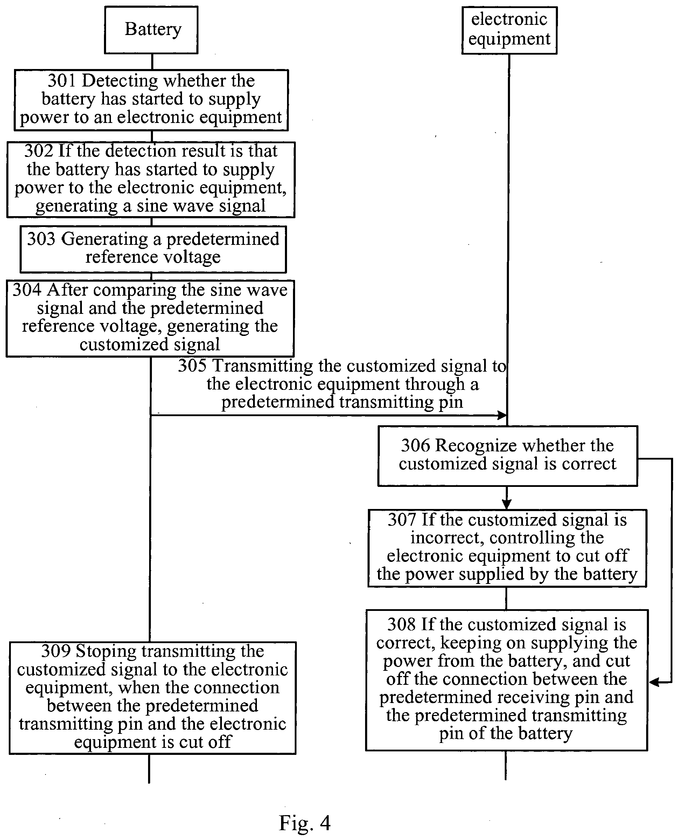

Fig. 4 is a flow chart showing a method for battery protection according to an exemplary embodiment. The method for battery protection is applied in the system for battery protection shown in Fig. 1 or Fig. 2. The method for battery protection may include steps as below.

In step 301, it is detected whether the battery has started to supply power to an electronic equipment.

The battery detects itself to know whether it has started to supply power to the electronic equipment. A power detecting circuit may be provided inside the battery to detect whether the rechargeable power supply in the battery has started to supply power to the electronic equipment.

In step 302, if the detection result is that the battery has started to supply power to the electronic equipment, a sine wave signal is generated.

If the detection result is that the battery has started to supply power to the electronic equipment, the battery generates a sine wave signal. The battery chip of the battery is provided with an oscillation circuit therein, and the oscillation circuit is configured to generate a sine wave signal. After the battery starts to supply power to the electronic equipment, i.e. after the positive electrode D+ of the power supply and the negative electrode D- of the power supply of the battery have respectively been connected with the positive and the negative electrodes of the electronic equipment to constitute a power supply circuit, the battery chip generates a sine wave signal with the oscillation circuit.

In step 303, a predetermined reference voltage is generated.

The battery generates a predetermined reference voltage. The battery chip of the battery is also provided with a reference voltage generating circuit therein. The reference voltage generating circuit is configured to generate a predetermined reference voltage. For example, the predetermined reference voltage is 0.

In step 304, after comparing the sine wave signal and the predetermined reference voltage, the customized signal is then generated.

The battery compares the sine wave signal with the predetermined reference voltage and generates the customized signal. The battery chip of the battery is also provided with a comparator therein, The comparator compares the sine wave signal with the predetermined reference voltage, and generates the customized signal. The customized signal may be a customized timing signal consisted of "0" and "1", such as "0101010011". Usually, the batteries with the same specification and the same model are set to generate the same customized signal.

For example, when the sine wave signal has a voltage value greater than the predetermined reference voltage, a high level is output; and when the sine wave signal has a voltage value less than or equal to the predetermined reference voltage, a low level is output. The frequency and amplitude of the sine wave signal generated by the oscillation circuit 122 and the predetermined reference voltage generated by the comparator 126 may be set according to actual requirements, and the predetermined reference voltage may be a voltage varying in real time.

In step 305, the customized signal is sent to the electronic equipment through the predetermined transmitting pin of the battery.

The battery sends the customized signal through its own predetermined transmitting pin to the electronic equipment. The battery chip of the battery may send the customized signal through the identity pin ID of the battery to the electronic equipment, and the processor of the electronic equipment may receives the customized signal sent from the battery through the GPIO pin.

Correspondingly, the electronic equipment receives a customized signal sent from the battery through the predetermined receiving pin, the customized signal is sent after the battery starts to supply power to the electronic equipment.

In step 306, it is recognized whether the customized signal is correct.

The electronic equipment recognizes whether the customized signal is correct. For example, a timing signal of "111111" may be pre-stored in the processor of the electronic equipment. When the electronic equipment receives the customized signal of "0101010011" sent from the battery through the predetermined receiving pin, since it is different from the pre-stored "111111" after comparison, the customized signal sent from the battery is interpreted as incorrect.

In step 307, if the customized signal is incorrect, the power supplied by the battery is cut off.

If the customized signal is incorrect, the electronic equipment cuts off the power supplied by the battery. When the customized signal is incorrect, the processor of the electronic equipment cuts off the power supplied by the battery, so as to guarantee the safety of the power supply. In particular, a switch may be set in the power supply circuit on the side of the electronic equipment 20. When the processor recognizes and finds that the customized signal is incorrect, the switch in the power supply circuit is controlled to be cut off, thereby realizing cutting off of the power supplied by the battery.

In step 308, if the customized signal is correct, the power supplied by the battery is kept on, and the connection between the predetermined transmitting pin and the predetermined transmitting pin of the battery is cut off.

If the customized signal is correct, the electronic equipment keeps on supplying the power from the battery, and cuts off the connection between the predetermined receiving pin and the predetermined transmitting pin of the battery. When the electronic equipment receives, through the predetermined receiving pin, the customized signal of "111111" sent from the battery, since it is the same as the pre-stored "111111" after comparison, the customized signal sent from the battery is interpreted as correct. In this way, the processor of the electronic equipment keeps on supplying the power from the battery, and cuts off the connection between the predetermined receiving pin and the predetermined transmitting pin of the battery. After validating that the customized signal is correct, in order to save the electrical energy of the battery and improve the usage time period of the battery, the electronic equipment may cut off the connection between the predetermined receiving pin and the predetermined transmitting pin of the battery.

In the first possible embodiment, it is to cut off the electrical connection between the predetermined receiving pin of the electronic equipment and the predetermined transmitting pin of the battery; or, in the second possible embodiment, a switch may be set in the circuit receiving the customized signal on the side of the electronic equipment. When the customized signal is determined as correct, the switch is controlled to be cut off.

In step 309, when the connection between the predetermined transmitting pin and the electronic equipment is cut off, the customized signal is stopped being transmitted to the electronic equipment.

When the connection between the predetermined transmitting pin and the electronic equipment is cut off, the battery stops transmitting the customized signal to the electronic equipment. When the connection between the predetermined transmitting pin and the electronic equipment is cut off, the circuit transmitting the customized signal of the battery is cut off, the battery stops transmitting the customized signal to the electronic equipment.

It should be noted that, for those batteries having no functions of transmitting the customized signals, in order to prevent those batteries from supplying power to the electronic equipment thus to cause negative consequences, the processor of the electronic equipment detects, within a time period after the electronic equipment has finished its boot initialization (i.e. the predetermined time period), whether the customized signal sent from the battery is received within the predetermined time period. If the customized signal sent from the battery is not received within the predetermined time period, the processor of the electronic equipment controls the electronic equipment to cut off the power supplied by the battery. If the customized signal sent from the battery is received within the predetermined time period, the processor of the electronic equipment recognizes whether the customized signal is correct.

Only the above steps 301 to 305 and step 309 may be implemented as the method for battery protection on the battery side; and only the above steps 306 to 308 may be implemented as the method for battery protection on the electronic equipment side.

In summary, in the method for battery protection provided by the present embodiment, the customized signal to the electronic equipment is sent through the predetermined transmitting pin of the battery chip, and the customized signal sent from the battery is received through the predetermined transmitting pin of the electronic equipment, the electronic equipment recognizes whether the customized signal is correct and if the customized signal is incorrect, the power supplied by the battery is controlled to be cut off. Thus it solves the problems that the imitation batteries may lead to negative consequences in the prior art, and achieves the effects of keeping on supplying the power from the battery only when the battery in usage is guaranteed to be an original battery satisfying the requirements, improving the safety of the batteries and the electronic equipment.

In the method for battery protection provided by the present embodiment, by cutting off the connection between the predetermined receiving pin and the predetermined transmitting pin of the battery in the case that the processor of the electronic equipment has validated that the customized signal is correct, an effect of saving the electrical energy of the battery and improving the usage time period of the battery is achieved. Meanwhile, in the method for battery protection provided by the present embodiment, by detecting whether the customized signal sent from the battery is received within the predetermined time period, and if the customized signal sent from the battery is not received within the predetermined time period, the processor of the electronic equipment controlling the electronic equipment to cut off the power supplied by the battery, those batteries having no functions of transmitting the customized signals are prevented from supplying power to the electronic equipment, avoiding negative consequences.

The following is a device embodiment of the present disclosure, which may be configured to execute the method embodiment of the present disclosure. For the details not disclosed in the device embodiment of the present disclosure, please refer to the method embodiment of the present disclosure.

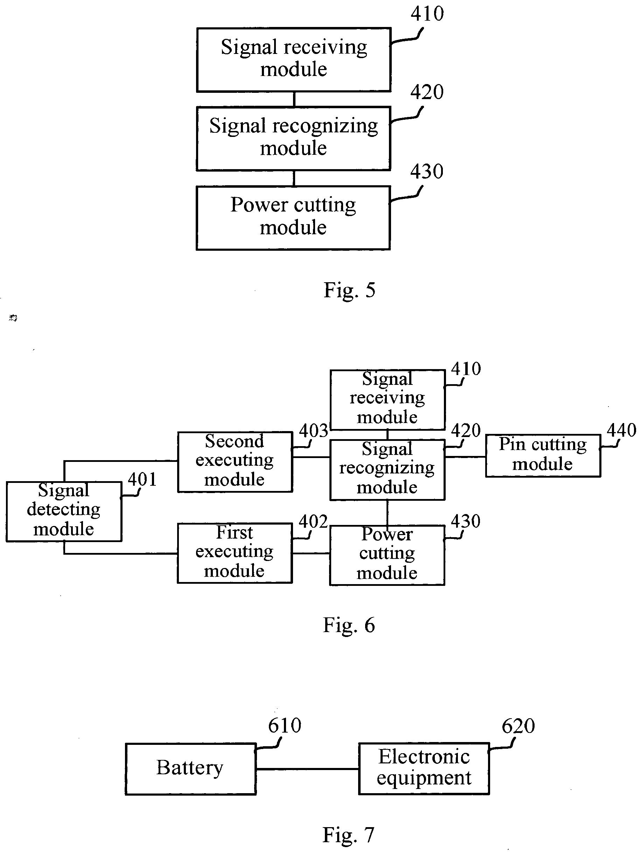

Fig. 5 is a structural block diagram showing a device for battery protection according to an exemplary embodiment of the present disclosure. The device for battery protection may be implemented through software, hardware or the combination of both as a part or the whole of the processor of the electronic equipment. The device for battery protection may include: a signal receiving module 410, a signal recognizing module 420 and a power cutting module 430.

The signal receiving module 410 is configured to receive a customized signal sent from the battery through a predetermined receiving pin.

The signal recognizing module 420 is configured to recognize whether the customized signal is correct.

The power cutting module 430 is configured to control the electronic equipment to cut off the power supplied by the battery, if the customized signal is incorrect.

In summary, in the device for battery protection provided by the present embodiment, the customized signal sent from the battery is received through the predetermined receiving pin, whether the customized signal is correct is recognized and if the customized signal is incorrect, the power supplied by the battery is controlled to be cut off. Thus it solves the problems that the imitation batteries may lead to negative consequences in the prior art, and achieves the effects of keeping on supplying the power from the battery only when the battery in usage is guaranteed to be an original battery satisfying the requirements, improving the safety of the batteries and the electronic equipment.

Fig. 6 is a structural block diagram showing a device for battery protection according to an exemplary embodiment of the present disclosure. The device for battery protection may be implemented through software, hardware or the combination of both as a part or the whole of the processor of the electronic equipment. The device for battery protection may include: a signal detecting module 401, a first executing module 402, a second executing module 403, a signal receiving module 410, a signal recognizing module 420, a power cutting module 430 and a pin cutting module 440.

The signal detecting module 401 is configured to detect whether the customized signal sent from the battery is received in a predetermined time period, wherein the predetermined time period means a time period after the electronic equipment has finished its boot initialization.

The first executing module 402 is configured to trigger the power cutting module 430 to execute its operation, if the customized signal sent from the battery is not received in the predetermined time period.

The second executing module 403 is configured to trigger the signal recognizing module 420 to execute its operation, if the customized signal sent from the battery is received in the predetermined time period.

The signal receiving module 410 is configured to receive the customized signal sent from the battery through the predetermined receiving pin.

The signal recognizing module 420 is configured to recognize whether the customized signal is correct.

The power cutting module 430 is configured to control the electronic equipment to cut off the power supplied by the battery, if the customized signal is incorrect.

The pin cutting module 440 is configured to keep on supplying the power from the battery, and cut off the connection between the predetermined receiving pin and the predetermined transmitting pin of the battery, if the customized signal is correct.

In summary, in the device for battery protection provided by the present embodiment, the customized signal sent from the battery is received through the predetermined receiving pin, whether the customized signal is correct is recognized and if the customized signal is incorrect, the power supplied by the battery is controlled to be cut off. Thus it solves the problems that the imitation batteries may lead to negative consequences in the prior art, and achieves the effects of keeping on supplying the power from the battery only when the battery in usage is guaranteed to be an original battery satisfying the requirements, improving the safety of the batteries and the electronic equipment.

In the device for battery protection provided by the present embodiment, by cutting off the connection between the predetermined receiving pin and the predetermined transmitting pin of the battery in the case that the processor of the electronic equipment has validated that the customized signal is correct, an effect is achieved to save the electrical energy of the battery and improve the usage time period of the battery. Meanwhile, in the device for battery protection provided by the present embodiment, by detecting whether the customized signal sent from the battery is received within the predetermined time period, and if the customized signal sent from the battery is not received within the predetermined time period, the processor of the electronic equipment controlling the electronic equipment to cut off the power supplied by the battery, those batteries having no functions of transmitting the customized signals are prevented from supplying power to the electronic equipment, avoiding negative consequences.

Fig. 7 is a structural block diagram showing a system for battery protection according to an exemplary embodiment of the present disclosure. The system for battery protection includes a battery 610 and an electronic equipment 620. The electronic equipment 620 includes the device for battery protection as shown in Fig. 5 or Fig. 6.

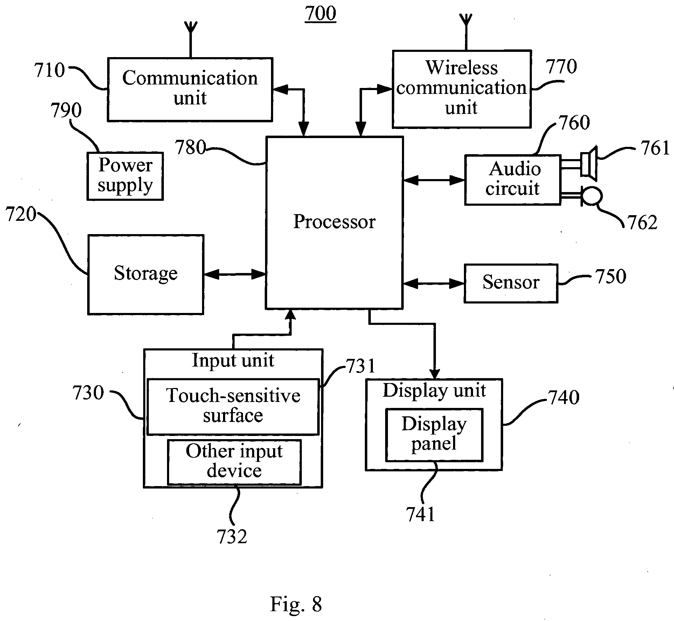

Fig. 8 is a structural diagram showing an electronic equipment according to an exemplary embodiment. The electronic equipment may be used to implement the method for battery protection provided in the above embodiments.

The electronic equipment 700 may include parts such as a communication unit 710, a memory 720 including one or more computer-readable storage media, an input unit 730, a display unit 740, a sensor 750, an audio circuit 760, a WIFI (Wireless Fidelity) module 770, a processor 780 including one or more processing cores, a power supply 790 and the like. Those skilled in the art may understand that, the structures of the electronic equipment as shown in this figure is not restrictive to the electronic equipment, and it may comprise more or less components than those in this figure, or a combination of some components, or different component arrangements.

The communication unit 710 may be configured to send and receive signals during sending and receiving of information or a process of calling. The communication unit 710 may be a network communication equipment such as a RF (Radio Frequency) circuit, a router, a modem or the like. In particular, when the communication unit 710 is a RF circuit, it may receive the downlink information of a base station, then hand it to one or more processors 780 to process. In addition, the communication unit 710 may transmit the related uplink data to the base station. Usually, the RF circuit as the communication unit includes but is not limited to an antenna, at least one amplifier, a tuner, one or more oscillator, a user ID module (SIM) card, a transceiver, a coupler, a LNA (Low Noise Amplifier), a diplexer and the like. In addition, the communication unit 710 may also communicate with network and other equipment through wireless communication. The wireless communication may apply any one of the communication standards or protocols, which include but are not limited to GSM (Global System of Mobile communication), GPRS (General Packet Radio Service), CDMA (Code Division Multiple Access), WCDMA (Wideband Code Division Multiple Access), LTE (Long Term Evolution), E-mail, SMS (Short Messaging Service,) or the like. A memory 720 may be configured to store software programs and modules, the processor 780 executes various function applications and data processing through executing software programs and modules stored in the memory 720. The memory 720 may mainly include a program storage area and a data storage area, wherein the program storage area may store operation systems, application programs required by at least one function (for example, voice playing functions, image playing functions and the like), etc.; the data storage area may store data created according to the applications of the electronic equipment 700 (for example, audio data, phone books and the like), etc. In addition, the memory 720 may include a high-speed random access memory, and may also include a nonvolatile storage such as at least one disk storage, a flash storage, or other volatile solid-state memories. Correspondingly, the memory 720 may also include a memory controller to provide accessing of the processor 780 and the input unit 730 to the memory 720.

The input unit 730 may be configured to receive input numerical or character information and generate signal inputs through a keypad, a mouse, an operation rod, optical or trackball related to user settings and function control. Preferably, the input unit 730 may include a touch-sensitive surface 731 and other input devices 732. The touch sensitive surface 731, or a touch display screen or a track pad, may collect touch operation on or near it by the user (for example the user operations on or near the touch sensitive surface 731 with any kind of suitable objects or attachments such as the finger, touch pen, and the like), and drive the corresponding connection device according to a preset program. Optionally, the touch sensitive surface 731 may include two parts, i.e., a touch detecting device and a touch controller. Wherein, the touch detecting device may detect the touch orientation of the user, and detect the signal caused by the touch operation, and then transmit the signal to the touch controller. The touch controller may receive the touch information from the touch detecting device and convert it into touch point coordinates and then transmit the coordinates to the processor 780 and can receive the command sent from the processor 780 to execute it. The touch controller also receives and performs instructions from the processor 780. Additionally, the touch sensitive surface 731 may be realized with various types such as resistive, capacitive, infrared, or surface acoustic wave and the like. The input unit 730 may also include other kind of input device 732 besides the input unit 730. Optionally, the other input device 732 may include, without limitation, one or more of a physical keypad, functional buttons (such as volume control button, switch button and the like), a trackball, a mouse, an operating rod and the like.

The display unit 740 may be configured to display the information input by the user or the information provided to the user and various user image interfaces of the electronic equipment 700, wherein those user image interfaces may consist of images, texts, icons, videos and arbitrary combinations thereof. The display unit 740 may include a display panel 741. Alternatively, the display panel 741 may be configured by using forms of LCD (Liquid Crystal Display), OLED (Organic Light-Emitting Diode) and the like. Further, the touch-sensitive surface 731 may cover the display panel 741, the touch-sensitive surface 731, when detecting the touch operation thereon or nearby, transmit it to the processor 780 to determine the type of the touch event, then the processor 780 provides corresponding visual output on the display panel 741 according to the type of the touch event. Although in Fig. 8, the touch-sensitive surface 731 and the display panel 741 may be two separated parts to implement input and input functions, but in some embodiments, the touch-sensitive surface 731 and the display panel 741 maybe integrated to implement the input and the output functions.

The electronic equipment 700 may also include at least one sensor 750 such as an optical sensor, a motion sensor and other sensors. The optical sensor may include an environment optical sensor and an approaching sensor, wherein the environment optical sensor may adjust the brightness of the display panel 741 according to the brightness of the environment light, and the approaching sensor may turn off the display panel 741 and/or the backlight when the electronic equipment 700 moves to near the ear. As one kind of the motion sensor, a gravity acceleration sensor may detect magnitudes of acceleration on respective directions (usually on three axes), may detect values and directions of the gravity when in stationary state, and may be configured to recognize applications of the mobile phone attitude (for example, horizontal and vertical screen switching, related games, magnetometer gesture calibration), vibration recognize related functions (for example a pedometer, knocking) and the like. The electronic equipment 700 may also be configured with other sensors such as a gyro, a barometer, a hygrometer, a thermometer, an infrared sensor and the like, which are not described repeatedly.

An audio circuit 760, a loudspeaker 761 and a microphone 762 may provide an audio interface between the user and the electronic equipment 700. The audio circuit 760 may transmit the electrical signal converted from the received audio data to the loudspeaker 761 to be converted into a voice signal output. On the other hand, the microphone 762 converts the collected voice signals into electrical signals, the audio circuit 760 receives the electrical signals and then converts them into audio data, then outputs the audio data to the processor 780 to be processed and transmitted the audio data to for example another electronic equipment through the RF circuit 710, or outputs the audio data to the memory 720 so as to be further processed. The audio circuit 760 may further include an earplug jack to provide communication between an external earphone and the electronic equipment 700.

In order to achieve wireless communication, the electronic equipment may be configured with a wireless communication unit 770 thereon. The wireless communication unit 770 may be a WIFI module. WIFI belongs to short-range wireless transmission technology. The electronic equipment 700 may help the user transmit or receive E-mail, browse web pages and access streaming media and the like through the wireless communication unit 770, which provides the user the wireless broadband internet access. Although the wireless communication unit 770 is shown in the drawings, it should be understood that, it does not belong to the necessary component of the client computer 700, and may be omitted according to requirements within the scope without changing the substance of the present disclosure.

The processor 780 is a control center of the electronic equipment 700 using various interfaces and wires to connect respective portions of the whole mobile phone. By running or executing software programs and/or modules stored in the memory 720, calling data stored in the memory 720, and executing various functions of the electronic equipment 700 and processing data, the processor 780 proceeds overall monitoring to the mobile phone. Optionally, the processor 780 may include one or more processing cores. Optionally, the processor 780 may integrate application processors and modem processors, wherein the application processors may mainly process the operation systems, the user interfaces, the application programs and the like, and the modem processors may mainly process wireless communications. It should be understood that, the above modem processors may be not integrated into the processor 780.

The electronic equipment 700 further includes a power supply 790 (for example, a battery) to supply power to respective parts. Preferably, the power supply may be logically connected with the processor 780 through a power supply management system, thereby realizing functions of managing charging discharging, or power consumption through the power supply management system, and managing the power consuming and the like. The power supply 790 may also include arbitrary components such as one or more DC or AC power supplies, a rechargeable system, a power supply malfunction detecting circuit, a power supply converter or an inverter, a power supply state indicator and the like.

Although not shown, the electronic equipment 700 may also include a camera, a Bluetooth module or the like, which is not described repeatedly.

In the present embodiment, a memory 720 is stored with one or more programs therein, wherein the one or more programs are configured to be executed by one or more processor 780, the one or more programs include instructions of the electronic equipment side related to execute the method for battery protection as shown in Fig. 3 or Fig. 4 of the present disclosure.

It is to be explained that, the device and the electronic equipment for battery protection provided by the above embodiment, when implementing the battery protection, is only illustrated by being divided into the above respective function modules. In actual applications, the device for obtaining information may assign the above functions to different function modules according to requirements, that is, to divide the inner structure of the controller into different function modules to accomplish a part of or the whole of functions described as above. In addition, the device and the electronic equipment for battery protection provided by the above embodiment shares the same conception with the method embodiments of the method for battery protection, the concrete implementing procedures of which may be seen by referring to the method embodiments, and is not described repeatedly.

In addition, typically the electronic equipment described in the present disclosure may be various handheld terminal devices such as a mobile phone, a personal digital assistant (PDA) and the like.

In addition, the method according to the present disclosure may further be implemented by a CPU executable computer program. When the computer program is executed by the CPU, the above functions defined in the method of the present disclosure are executed.

In addition, the above steps in the method and the units in the system may be implemented by a controller and a computer readable storage device configured to store the computer programs for the controller to achieve the functions of the above steps or units.

In addition, it should be understood that, the computer readable storage device (for example, a memory) described by the present disclosure may be a volatile memory or a nonvolatile memory, or may include both of the volatile memory and the nonvolatile memory. As an example, the nonvolatile memory may include a read-only memory (ROM), a programmable ROM (PROM), an electrically programmable read-only memory ROM (EPROM), an electrically erasable programmable ROM (EEPROM) or a flash memory. The volatile memory may include a random access memory (RAM), which may function as an external cache memory. As an example, the RAM may be obtained in various kinds such as a synchronous RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM) and a directly Rambus RAM (DRRAM). The storage device in the disclosed aspect intends to include but not to be limited by those and other proper types of memories.

It should be understood by those skilled in the art that, the various exemplary logic blocks, modules, circuits and algorithm steps described in conjunction with the disclosure herein may be implemented by electron hardware, computer software or the combination of both. In order to clearly explain the interchangeability of the hardware and the software, it has been generally illustrated with respect to the functions of the various exemplary members, blocks, modules, circuits and steps. Whether such functions are implemented by software or hardware depends on the specific application and the design restriction applied to the whole system.

By using the following components designed to execute the functions described herein, the various exemplary logic blocks, modules and circuits described in conjunction with the disclosure herein may carry out or execute: a general-purpose processor, a digital signal processor (DSP), a specific integrated circuit (ASIC), a field programmable gate array (FPGA) or other programmable logic devices, a discrete gate or transistor logic, a discrete hardware assemble or any combination of those components. The general-purpose processor may be a microprocessor. However, alternatively, the processor may be any of traditional processors, controllers, microcontrollers or state machines. The processor may also be implemented by a combination of the computing devices such as a combination of a DSP and a microprocessor, a plurality of microprocessors, one or more microprocessors in conjunction with DSP core, or any other those kind of configurations.

The method or algorithm steps described in conjunction with the disclosure herein may be directly included in the hardware, in the software modules executed by the processor or in the combination of both. The software modules may host in a RAM memory, a flash memory, a ROM memory, an EPROM memory, an EEPROM memory, a register, a hard disk, a movable disk, a CD-ROM, or any of other kind of storage medium known in the art. The exemplary storage media are coupled to the processor, so that the processor can read/write information from/to the storage media. In an alternative aspect, the storage media may be integrated with the processor. The processor and the storage media may host in an ASIC. The ASIC may host in a user terminal. In an alternative aspect, the processor and the storage media may host in a user terminal as a discrete assembly.

In one or more exemplary designs, the function may be implemented in hardware, software, firmware or any combinations thereof. If it is implemented in software, the function may be stored in the computer readable media or transferred via the computer readable media as one or more instructions or codes. The computer readable media may include a computer storage media and a communication media, wherein the communication media may include any medium which is helpful for transferring the computer program from one site to another site. The storage media may be any usable medium accessible by a general or dedicated computer. As an example, the computer readable media may include RAM, ROM, EEPROM, CD-ROM or other CD storage devices, disk storage devices or other magnetic storage devices, or may be any other media for carrying or storing the required program code in form of instructions or data structure accessible by a general or dedicated computer or a general or dedicated processor. In addition, any kind of connection may be properly referred as a computer readable medium. For example, if software is sent from a website, a server or other distant sources with a coaxial cable, an optical fiber cable, a twisted-pair, or a digital user line (DSL), or with the wireless technology such as infrared, radio wave or microwave, those above coaxial cable, optical fiber cable, twisted-pair, DSL or the wireless technology such as infrared, radio wave and microwave are all included in the definition of media. As used herein, magnetic disk and optical disk may include a compact disk (CD), a laser disk, an optical disk, a digital versatile disk (DVD), a floppy disk or a blue-ray disk, wherein the magnetic disk usually represents data magnetically, and the optical disk usually represents data optically by using a laser. The combination of the above components may also be included in the scope of the computer readable media.

According to the functions of the method claims in the disclosed embodiments described herein, steps and/or actions are not executed in any specific sequence. In addition, although the element in the present disclosure may be described or required individually, it may be conceived as plural, unless being clearly defined as single.

It should be understood that the singular form "one (a, an, the)" used herein intends to also include the plural form. It should also be understood that the term "and/or" means to include arbitrary and all possible combinations of one or more items listed in association.

The serial numbers for the embodiments of the present disclosure are only used for description, not for illustrating priority levels of the embodiments.

It should be understood for those skilled in the art that a part of or the whole of steps in the embodiments may be implemented by hardware, or by programs instructing the related hardware. The programs may be stored in a computer readable medium. The storage medium described as above may be a red-only memory, a magnetic disk, an optical disk or the like.

## Claims

1. A battery (10, 610), wherein the battery (10, 610) comprises: a rechargeable power supply (110) and a battery chip (120),
wherein the battery chip (120) comprises an oscillation circuit (122), a reference voltage generating circuit (124) and a comparator (126), wherein the comparator (126) has two input terminals to be connected respectively to the oscillation circuit (122) and the reference voltage generating circuit (124), and the comparator (126) has an output terminal to be connected to a predetermined transmitting pin, wherein;
the oscillation circuit (122) is configured to generate a sine wave signal, after the rechargeable power supply (110) starts to supply power to electronic equipment (620) connected to the battery;
the reference voltage generating circuit (124) is configured to generate a predetermined reference voltage; and
the comparator (126) is configured to generate the customized binary signal after comparing the sine wave signal and the predetermined reference voltage;
a power detecting circuit configured to detect whether the rechargeable power supply (110) has started to supply power to electronic equipment (620) connected to the battery, and if the detection result is that the rechargeable power supply (110) has started to supply power to the electronic equipment (620), to send the generated customized binary signal to the electronic equipment (620) through the predetermined transmitting pin.

2. The battery (10, 610) according to claim 1, wherein
the battery chip (120) is further configured to stop transmitting the customized signal to the electronic equipment (620), when the connection between the predetermined transmitting pin and the electronic equipment (620) is cut off.

3. A method for protecting an electronic device from a potentially defective battery (10, 610) that is connected to the electronic device, wherein the method comprises steps of:
detecting whether the battery (10, 610) has started to supply power to the electronic equipment (620) (301, 202); and
if the detection result is that the battery has started to supply power to the electronic equipment (620), transmitting a customized binary signal to the electronic equipment (620) through a predetermined transmitting pin of the battery (10, 610) (302, 204);
wherein the transmitting the customized binary signal to the electronic equipment (620) through the predetermined transmitting pin of the battery (10, 610) (302,204) comprises:
generating a sine wave signal;
generating a predetermined reference voltage;
comparing the sine wave signal and the predetermined reference voltage, and then generating the customized binary signal; and
transmitting the customized binary signal to the electronic equipment (620) through the predetermined transmitting pin of the battery (10, 610) (305);
receiving a customized signal sent from the battery (10, 610) through a predetermined receiving pin in the electronic equipment;
wherein the electronic equipment (620) is configured to recognize whether the customized binary signal is correct (306, 206), and if the customized binary signal is incorrect, to control the power supplied by the battery (10, 610) to be cut off (307, 208).

4. The method according to claim 3, wherein the method further comprises:
when the connection between the predetermined transmitting pin and the electronic equipment (620) is cut off, stopping transmitting the customized binary signal to the electronic equipment (620) (309).

5. The method according to claim 3, wherein the method further comprises steps of:
detecting whether the customized binary signal sent from the battery (10, 610) is received in a predetermined time period, wherein the predetermined time period is a time period after the electronic equipment (620) has finished its boot initialization;
if the customized binary signal sent from the battery (10, 610) is not received in the predetermined time period, executing the step of controlling the electronic equipment (620) to cut off the power supplied by the battery (10, 610); and
if the customized binary signal sent from the battery (10, 610) is received in the predetermined time period, executing the step of recognizing whether the customized binary signal is correct.

6. The method according to claim 5, wherein the method further comprises:
if the customized binary signal is correct, keeping on supplying the power from the battery (10, 610), and cutting off the connection between the predetermined receiving pin and the predetermined transmitting pin of the battery (10, 610) (308).

## Patentansprüche

1. Eine Batterie (10, 610), wobei die Batterie (10, 610) umfasst: eine wiederaufladbare Energieversorgung (110) und einen Batteriechip (120),
wobei der Batteriechip (120) einen Schwingkreis (122), eine Referenzspannungserzeugungsschaltung (124) und einen Komparator (126) umfasst, wobei der Komparator (126) zwei Eingangsanschlüsse aufweist, die jeweils an den Schwingkreis (122) und die Refierenzspannungserzeugungsschaltung (124) anzuschließen sind, und der Komparator (126) einen Ausgangsanschluss aufweist, der an einen vorbestimmten Übertragungspol anzuschließen ist, wobei;
der Schwingkreis (122) eingerichtet ist, um ein Sinuswellensignal zu erzeugen, nachdem die wiederaufladbare Energieversorgung (110) beginnt, eine an die Batterie angeschlossene elektronische Einrichtung (620) mit Energie zu versorgen;
die Referenzspannungserzeugungsschaltung (124) eingerichtet ist, um eine vorbestimmte Referenzspannung zu erzeugen; und
der Komparator (126) eingerichtet ist, das individuelle binäre Signal zu erzeugen nach einem Vergleichen des Sinuswellensignals und der vorbestimmten Referenzspannung;
eine Energiedetektionsschaltung, die eingerichtet ist, um zu detektieren, ob die wiederaufladbare Energieversorgung (110) begonnen hat, die an die Batterie angeschlossene elektronische Einrichtung (620) mit Energie zu versorgen, und, wenn das Detektionsergebnis ist, dass die wiederaufladbare Energieversorgung (110) begonnen hat, die elektronische Einrichtung (620) mit Energie zu versorgen, das erzeugte individuelle binäre Signal an die elektronische Einrichtung (620) mittels des vorbestimmten Übertragungspols zu senden.

2. Die Batterie (10, 610) gemäß Anspruch 1, wobei
der Batteriechip (120) weiterhin eingerichtet ist, ein Übertragen des individuellen Signals an die elektronische Einrichtung (620) zu stoppen, wenn die Verbindung zwischen dem vorbestimmten Übertragungspol und der elektronischen Einrichtung (620) abgeschnitten ist.

3. Ein Verfahren zum Schutz eines elektronischen Gerätes vor einer potentiell defekten Batterie (10, 610), die an das elektronische Gerät angeschlossen ist, wobei das Verfahren Schritte umfasst von:
Detektieren, ob die Batterie (10, 610) begonnen hat, die elektronische Einrichtung (620) (301, 202) mit Energie zu versorgen; und
wenn das Detektionsergebnis ist, dass die Batterie begonnen hat, die elektronische Einrichtung (620) mit Energie zu versorgen, Übertragen eines individuellen binären Signals an die elektronische Einrichtung (620) mittels eines vorbestimmten Übertragungspols der Batterie (10, 610) (302, 204);
wobei das Übertragen des individuellen binären Signals an die elektronische Einrichtung (620) mittels des vorbestimmten Übertragungspols der Batterie (10, 610) (302, 204) umfasst:
Erzeugen eines Sinuswellensignals;
Erzeugen einer vorbestimmten Referenzspannung;
Vergleichen des Sinuswellensignals und der vorbestimmten Referenzspannung, und dann Erzeugen des individuellen binären Signals; und
Übertragen des individuellen binären Signals an die elektronische Einrichtung (620) mittels des vorbestimmten Übertragungspols der Batterie (10, 610) (305);
Empfangen eines individuellen Signals, das von der Batterie (10, 610) gesendet ist, mittels eines vorbestimmten Empfangspols in der elektronischen Einrichtung,
wobei die elektronische Einrichtung (620) eingerichtet ist, um zu erkennen, ob das individuelle binäre Signal korrekt ist (306, 206), und wenn das individuelle binäre Signal inkorrekt ist, die von der Batterie (10, 610) bereitgestellte Energie zu steuern, um abgeschnitten zu werden (307, 208).

4. Das Verfahren gemäß Anspruch 3, wobei das Verfahren weiterhin umfasst:
wenn die Verbindung zwischen dem vorbestimmten Übertragungspol und der elektronischen Einrichtung (620) abgeschnitten wird, Stoppen eines Übertragens des individuellen binären Signals an die elektronische Einrichtung (620) (309).

5. Das Verfahren gemäß Anspruch 3, wobei das Verfahren weiterhin Schritte umfasst von:
Detektieren, ob das individuelle binäre Signal, das von der Batterie (10, 610) gesendet ist, in einer vorbestimmten Zeitdauer empfangen wird, wobei die vorbestimmte Zeitdauer eine Zeitdauer ist, die folgt, nachdem die elektronische Einrichtung (620) ihre Hochfahrinitialisierung abgeschlossen hat;
wenn das individuelle binäre Signal, das von der Batterie (10, 610) gesendet ist, nicht in der vorbestimmten Zeitdauer empfangen wird, Ausführen des Schrittes des Steuerns der elektronischen Einrichtung (620), um die von der Batterie (10, 610) bereitgestellte Energie abzuschneiden; und
wenn das individuelle binäre Signal, das von der Batterie (10, 610) gesendet ist, in der vorbestimmten Zeitdauer empfangen wird, Ausführen des Schrittes des Erkennens, ob das individuelle binäre Signal korrekt ist.

6. Das Verfahren gemäß Anspruch 5, wobei das Verfahren weiterhin umfasst:
wenn das individuelle binäre Signal korrekt ist, Fortfahren mit dem Versorgen mit der Energie von der Batterie (10, 610), und Abschneiden der Verbindung zwischen dem vorbestimmten Empfangspol und dem vorbestimmten Übertragungspol der Batterie (10, 610) (308).

## Revendications

1. Batterie (10, 610), la batterie (10, 610) comprenant : une alimentation rechargeable (110) et une puce de batterie (120),
dans laquelle la puce de batterie (120) comprend un circuit d'oscillation (122), un circuit de génération de tension de référence (124) et un comparateur (126), le comparateur (126) comportant deux bornes d'entrée destinées à être connectées respectivement au circuit d'oscillation (122) et au circuit de génération de tension de référence (124), et le comparateur (126) comportant une borne de sortie destinée à être connectée à une broche de transmission prédéterminée, où :
le circuit d'oscillation (122) est configuré pour générer un signal d'onde sinusoïdale, après que l'alimentation rechargeable (110) a commencé à délivrer une alimentation à un équipement électronique (620) connecté à la batterie ;
le circuit de génération de tension de référence (124) est configuré pour générer une tension de référence prédéterminée ; et
le comparateur (126) est configuré pour générer le signal binaire personnalisé après la comparaison du signal d'onde sinusoïdale et de la tension de référence prédéterminée ;
un circuit de détection d'alimentation étant configuré pour détecter si l'alimentation rechargeable (110) a ou non commencé à délivrer une alimentation à un équipement électronique (620) connecté à la batterie, et, si le résultat de détection est que l'alimentation rechargeable (110) a commencé à délivrer une alimentation à l'équipement électronique (620), pour envoyer le signal binaire personnalisé généré à l'équipement électronique (620) par l'intermédiaire de la broche de transmission prédéterminée.

2. Batterie (10, 610) selon la revendication 1, dans laquelle :
la puce de batterie (120) est de plus configurée pour arrêter la transmission du signal personnalisé à l'équipement électronique (620) lorsque la connexion entre la broche de transmission prédéterminée et l'équipement électronique (620) est interrompue.

3. Procédé pour protéger un dispositif électronique vis-à-vis d'une batterie potentiellement défectueuse (10, 610) qui est connectée au dispositif électronique, le procédé comprenant les étapes consistant à :
détecter si la batterie (10, 610) a ou non commencé à délivrer une alimentation à l'équipement électronique (620) (301, 202) ; et
si le résultat de détection est que la batterie a commencé à délivrer une alimentation à l'équipement électronique (620), transmettre un signal binaire personnalisé à l'équipement électronique (620) par l'intermédiaire d'une broche de transmission prédéterminée de la batterie (10, 610) (302, 204) ;
dans lequel la transmission du signal binaire personnalisé à l'équipement électronique (620) par l'intermédiaire de la broche de transmission prédéterminée de la batterie (10, 610) (302, 204) comprend :
la génération d'un signal d'onde sinusoïdale ;
la génération d'une tension de référence prédéterminée ;
la comparaison du signal d'onde sinusoïdale et de la tension de référence prédéterminée, puis la génération du signal binaire personnalisé ; et
la transmission du signal binaire personnalisé à l'équipement électronique (620) par l'intermédiaire de la broche de transmission prédéterminée de la batterie (10, 610) (305) ;
la réception d'un signal personnalisé envoyé à partir de la batterie (10, 610) par l'intermédiaire d'une broche de réception prédéterminée dans l'équipement électronique ;
dans lequel l'équipement électronique (620) est configuré pour reconnaître si le signal binaire personnalisé est ou non correct (306, 206), et, si le signal binaire personnalisé est incorrect, à commander l'alimentation délivrée par la batterie (10, 610) de telle sorte qu'elle soit interrompue (307, 208).

4. Procédé selon la revendication 3, le procédé comprenant de plus :
lorsque la connexion entre la broche de transmission prédéterminée et l'équipement électronique (620) est interrompue, l'arrêt de la transmission du signal binaire personnalisé à l'équipement électronique (620) (309).

5. Procédé selon la revendication 3, le procédé comprenant de plus les étapes consistant à :
détecter si le signal binaire personnalisé envoyé à partir de la batterie (10, 610) est ou non reçu au cours d'une période de temps prédéterminée, la période de temps prédéterminée étant une période de temps après que l'équipement électronique (620) a fini son initialisation d'amorçage ;
si le signal binaire personnalisé envoyé à partir de la batterie (10, 610) n'est pas reçu au cours de la période de temps prédéterminée, exécuter l'étape de commande de l'équipement électronique (620) de façon à interrompre l'alimentation délivrée par la batterie (10, 610) ; et
si le signal binaire personnalisé envoyé à partir de la batterie (10, 610) est reçu au cours de la période de temps prédéterminée, exécuter l'étape de reconnaissance du fait que le signal binaire personnalisé est ou non correct.

6. Procédé selon la revendication 5, le procédé comprenant de plus :
si le signal binaire personnalisé est correct, la poursuite de la délivrance de l'alimentation à partir de la batterie (10, 610), et l'interruption de la connexion entre la broche de réception prédéterminée et la broche de transmission prédéterminée de la batterie (10, 610) (308).
